**Europäisches Patentamt**

**European Patent Office**

**Office européen des brevets**

(11) Veröffentlichungsnummer: **0 232 520**
**B1**

(12) **EUROPÄISCHE PATENTSCHRIFT**

(45) Veröffentlichungstag der Patentschrift:
**31.05.89**

(51) Int. Cl.⁴: **C03B 37/14**

(21) Anmeldenummer: **86117423.3**

(22) Anmeldetag: **06.09.84**

(60) Veröffentlichungsnummer der früheren Anmeldung
nach Art. 76 EPÜ: **0137312**

(54) Verfahren zur Herstellung zweier exakt fluchtender Geradführungen.

(30) Priorität: **23.09.83 DE 3334565**

(43) Veröffentlichungstag der Anmeldung:
**19.08.87 Patentblatt 87/34**

(45) Bekanntmachung des Hinweises auf die Patenterteilung:
**31.05.89 Patentblatt 89/22**

(84) Benannte Vertragsstaaten:
**AT BE CH DE FR GB IT LI NL SE**

(56) Entgegenhaltungen:
**APPLIED OPTICS, Band 17, Nr. 12, 15. Juni 1978,**
**Seiten 1959-1964; I. HATAKEYAMA et al.: "Fusion**
**splices for optical fibers by discharge heating"**

(73) Patentinhaber: **Siemens Aktiengesellschaft Berlin und**
**München, Wittelsbacherplatz 2, D-8000 München 2(DE)**

(72) Erfinder: **Keil, Rudolf, Dr., Pulverturmstrasse 27a,**
**D-8000 München 45(DE)**
Erfinder: **Mathyssek, Konrad, Dr.,**
**Herzog-Tassilo-Ring 28, D-8011 Zorneding(DE)**

## Beschreibung

Die vorliegende Erfindung betrifft ein Verfahren zur Herstellung zweier exakt fluchtender Geradführungen nach dem Oberbegriff des Patentanspruchs 1.

Für die optische Nachrichtentechnik mit Monomode-Glasfasern werden Sendemodule benötigt, die einen möglichst hohen Einkoppelwirkungsgrad des Halbleiterlaserlichts in die Monomode-Glasfaser erreichen. Eine mögliche Koppeloptik ist der konisch sich verjüngende Faserendabschnitt – im folgenden kurz Taper genannt – mit rundgeschmolzenem Ende (siehe Kuwahara, H. Sasaki, M. Tokoyo, N: Efficient coupling from semiconductor lasers into singlemode fibers with tapered hemispherical ends, Appl. Optics, 19 (1980) S. 2578–2583).

Die Faser wird dazu beispielsweise in einem Lichtbogen lokal bis zum Erweichungspunkt erhitzt und gespannt, so daß sie sich in dem erweichten Bereich bleibend einschnürt. Die erkaltete eingeschnürte Faser wird etwa an der engsten Stelle der Einschnürung durchtrennt und das Ende eines so erhaltenen Tapers wird wiederum im Lichtbogen zu einer Linse rundgeschmolzen. Die Stelle, an der in der Einschnürung durchtrennt wird, ist durch die Laser- und Faserparameter festgelegt, die gegeben sind durch den Fernfeldwinkel des Lasers und den Kerndurchmesser, den Manteldurchmesser und den Brechzahlsprung der Faser.

Zur Erreichung eines hohen Koppelwirkungsgrades zwischen der Laserdiode und der anzukoppelnden Monomode-Glasfaser bei möglichst einfacher Justierung, bei der keine Winkeljustierung vorgenommen werden muß, ist eine zur Faserachse symmetrische Fernfeldverteilung der aus dem Taper mit der angeschmolzenen Linse bestehenden Koppeloptik notwendig. Unter der Fernfeldverteilung der Koppeloptik ist hierbei das Fernfeld des aus der Linse am Ende des Tapers austretenden Lichts zu verstehen, wenn über das entgegengesetzte Faserende eingekoppelt wird. Eine zur Faserachse symmetrische Fernfeldverteilung kann durch einen möglichst rotationssymmetrischen Taper erreicht werden.

Eine in der ursprünglichen Anmeldung nach Artikel 76 EPÜ, EP-A1 0 137 312 (Stammanmeldung) vorgeschlagene Vorrichtung, mit der rotationssymmetrische Taper mit definierten Parametern reproduzierbar herstellbar sind, weist zwei auf beiden Seiten der Stelle der Erhitzung der Faser durch die Heizeinrichtung angeordnete, relativ zueinander fixierte exakt fluchtende Geradführungen für die gespannte Faser und eine Spannvorrichtung auf, deren Spannkraft vorgebbar begrenzt ist.

Die vorgeschlagene Vorrichtung ist im Aufbau einfach und es lassen sich mit ihr rotationssymmetrische Taper in der gewünschten Form reproduzierbar herstellen. Sie gewährleistet auch einen stets gleichbleibenden Abstand zwischen einem Faserende und der Einschnürung in der Faser. Damit ist eine sehr einfache Justierung der Einschnürung für den Durchtrennungsvorgang gegeben.

Aufgabe der Erfindung ist es, ein Verfahren zur Herstellung zweier exakt fluchtender Geradführungen nach dem Oberbegriff des Patentanspruchs anzugeben.

Diese Aufgabe wird durch die im kennzeichnenden Teil dieses Anspruchs angegebenen Merkmale gelöst.

Die Erfindung wird beispielhaft anhand der Figuren in der folgenden Beschreibung näher erläutert. Von den Figuren zeigen:

Figur 1 in perspektivischer Darstellung schematisch eine Vorrichtung zur reproduzierbaren Herstellung rotationssymmetrischer Taper,

Figur 2 in perspektivischer Darstellung einen U-förmigen Trägerkörper, dessen Schenkel durch ein Plättchen mit durchgehender Führungsnut überbrückt ist,

Figur 3 in der gleichen Darstellung den Trägerkörper nach Figur 2 mit dem Unterschied, daß ein Mittelabschnitt des Plättchens entfernt und damit die Überbrückung unterbrochen worden ist.

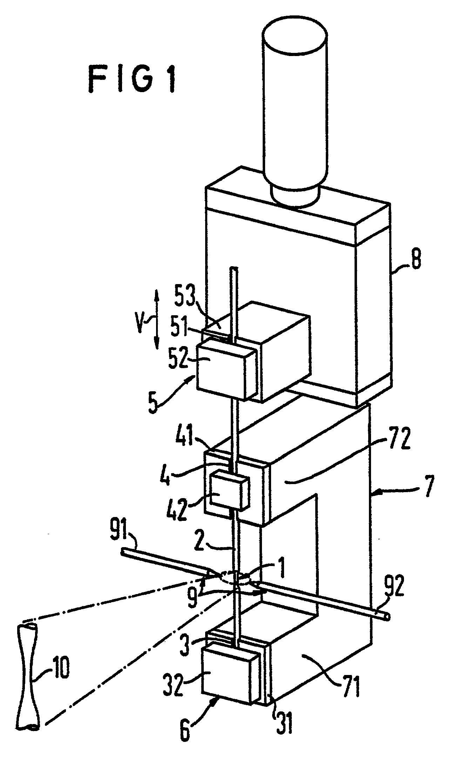

Bei der Vorrichtung nach Figur 1 sind auf den Stirnflächen der Schenkel 71 und 72 eines U-förmigen Trägerkörpers 7 zwei Siliziumplättchen 31 und 41 geklebt, von denen jedes eine V-förmige Führungsnut 3 bzw. 4 aufweist. Diese beiden vertikal verlaufenden Führungsnuten 3 und 4 fluchten exakt und bilden die beiden relativ zueinander fixierten, exakt fluchtenden Geradführungen für die gespannte Faser 2, die in diesen Führungsnuten 3 und 4 anzuordnen ist. In der unteren Führungsnut 3 wird die Faser durch einen relativ starken Dauermagneten 32, der von dem Trägerkörper 7 angezogen wird, festgeklemmt. In der oberen Führungsnut 4 wird die Faser 2 durch einen relativ schwachen Dauermagneten 42 verschiebbar gehalten, der ebenfalls von dem Körper 7 angezogen wird.

Oberhalb der Führungsnut 4 ist auf einem Trägerkörper 53 eine weitere vertikale V-förmige Führungsnut 51 für die Faser 2 angeordnet, die mit den beiden Führungsnuten 3 und 4 im wesentlichen fluchtet. Die Faser 2 wird in dieser oberen Führungsnut 51 durch einen von dem Trägerkörper 52 angezogenen Dauermagneten 52 relativ mittlerer Stärke mit begrenzter Klemmkraft festgeklemmt.

Der Trägerkörper 53 der oberen Führungsnut 51 ist an einem vertikal, d.h. in Richtung des Doppelpfeiles V, verschiebbaren Schiebetisch 8 mit Motorantrieb befestigt. Dadurch ist die obere Führungsnut 51, die zusammen mit dem Dauermagneten 52 mittlerer Stärke eine relativ zu den Führungsnuten 3 und 4 bewegliche Haltevorrichtung 5 bildet, vertikal von der untersten Führungsnut 3, die zusammen mit dem starken Dauermagneten 32 eine relativ zu den beiden exakt fluchtenden Geradführungen 3 und 4 fixierte Haltevorrichtung 6 bildet, fortbewegbar.

Durch diese Fortbewegung der oberen Klemmvorrichtung 5 von der unteren relativ fixierten Klemmvorrichtung 6 wird die in den Führungsnuten 3, 4 und 51 gehaltene Faser gespannt. Der Dauermagnet 52 mittlerer Stärke der oberen Klemmvorrichtung 5, der im Vergleich zum starken Dauermagneten 32 der unteren Klemmvorrichtung schwächer ist, bewirkt, daß beim Fortbewegen der oberen Klemmvorrichtung 5 von der unteren Klemmvorrichtung 6 ab dem Erreichen einer von der mittleren Stärke des Magneten 52 abhängigen Zuspannung in der Faser 2 diese Faser relativ zur oberen Klemmvorrichtung 5 durchrutscht, während sie in der unteren Klemmvorrichtung 6 weiterhin festgehalten wird. Die obere Klemmvorrichtung 5 bildet auf diese Weise ein Grenzkraft-Reibgesperre, welches die Zugspannung in der Faser 2 nach oben begrenzt, während die Faser selbst in ihrer Position relativ zu den beiden Geradführungen 3 und 4 unverändert bleibt.

Wird während des relativen Durchrutschens der Faser 2 durch die obere Klemmvorrichtung 5 der Lichtbogen der als Wechselstromlichtbogen-Einrichtung ausgebildeten Heizeinrichtung 9 gezündet und die Faser an einer Stelle 1 zwischen den beiden Geradführungen 3 und 4 durch diesen Lichtbogen lokal bis zum Erweichungspunkt erhitzt, so greift das Grenzkraft-Reibgesperre 5 wieder, weil wegen der Nachgiebigkeit des erweichten Fasermaterials die Magnetkraft des Magneten 52 der oberen Klemmvorrichtung 5 wieder zum Festklemmen der Faser 2 in der ziehenden oberen Führungsnut 51 ausreicht, und man erhält aufgrund der Auseinanderbewegung der Faserabschnitte auf beiden Seiten der erweichten Stelle 1 der Faser 2 eine bleibende Einschnürung an dieser Stelle 1. Nach dem Abschalten des Lichtbogens erkaltet die Faser 2 in der erweichten Stelle sehr rasch und die Faser 2 rutscht relativ zur Klemmvorrichtung 5 wieder durch.

Anstelle eines Grenzkraft-Reibgesperres in Form der Klemmvorrichtung 5 kann auch eine die Klemmvorrichtung 5 mit einem Antriebsmotor zum Bewegen dieser Klemmvorrichtung 5 verbindende Rutschkupplung verwendet werden, wobei dafür zu sorgen ist, daß sowohl der Magnet 32 der unteren Klemmvorrichtung 6 als auch der Magnet 52 der oberen Klemmvorrichtung 5 ausreichend stark sind, so daß die Rutschkupplung rutscht, bevor die Faser relativ zu den Klemmvorrichtungen 5 und 6 durchrutscht.

Die Steilheit der Einschnürung in der erweichten Stelle 1 die beispielhaft und vergrößert herausgezeichnet und mit 10 bezeichnet ist, wird im wesentlichen durch den Elektrodenabstand der senkrecht zur gespannten Faser 2 angeordneten Elektroden 91 und 92 der Wechselstromlichtbogen-Einrichtung 9, durch die Stromstärke des Lichtbogens und durch die Ziehgeschwindigkeit bestimmt, mit der die beiden Klemmvorrichtungen 5 und 6 auseinanderbewegt werden. Die Länge der Einschnürung 10 hängt von der Brenndauer des Lichtbogens und von der genannten Ziehgeschwindigkeit ab. Alle genannten Parameter lassen sich gut einstellen, so daß die Form der Einschnürung und damit die Form des Tapers reproduzierbar sind. Die Kraft des Dauermagneten 52 der oberen Klemmvorrichtung 5 ist über einen weiten Bereich unkritisch und hat praktisch keinen Einfluß auf die Form der Einschnürung 10. Dies erklärt sich aus dem raschen Temperaturanstieg der Faser 2 im Lichtbogen. Ein stärkerer Magnet 52 bewirkt nur einen etwas früheren Beginn des Ziehvorgangs. Zu große Klemmkräfte in der oberen Klemmvorrichtung 5 bewirken ein Abreißen der Faser 2 in der Einschnürung 10. Dagegen ist bei zu kleinen Kräften, die beispielsweise kleiner als 1 mN sind, das Ziehen einer Einschnürung nicht mehr reproduzierbar möglich. Für die reproduzierbare Herstellung der Einschnürung sollte die Zugkraft, ab der die Faser 2 relativ zur Klemmvorrichtung 5 durchrutscht, etwa 0,3 N betragen. Die Rotationssymmetrie der Einschnürung 10 ist nur gewährleistet, wenn die Führungsnuten 3 und 4 zur Aufnahme der Faser 2 zueinander exakt fluchten, d.h. keinen Winkel- oder Achsversatz aufweisen. Dadurch wird das Auftreten von Querkräften vermieden, die beim Erweichen der Faser 2 zu einer seitlichen Verbiegung der Einschnürung 10 führen. Es wurde die Erkenntnis gewonnen, daß die erforderliche exakte Ausrichtung von Führungsnuten auf relativ zueinander bewegten Teilen mit vertretbarem Aufwand praktisch nicht möglich ist. Die Verwendung von wenigstens zwei auf beiden Seiten der Stelle 1 der Erhitzung der Faser 2 angeordneten, relativ zueinander fixierten und exakt fluchtenden Geradführungen 3 und 4 für die gespannte Faser 2 gewährleisten die Rotationssymmetrie der Einschnürung 10.

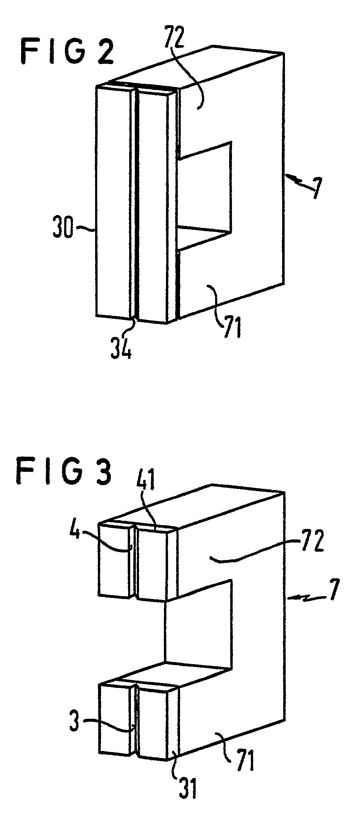

Während sich das bisher beschriebene auf das in der Stammanmeldung beanspruchte bezieht, wird im folgenden die hier beanspruchte Erfindung beschrieben. Die genaue Ausrichtung der beiden Geradführungen 3 und 4, die erfindungsgemäß nach den Figuren 2 und 3 dadurch erreicht werden kann, daß beispielsweise ein Quarz- oder Siliziumplättchen 30 mit einer geradlinig verlaufenden, durchgehenden, V-förmigen Führungsnut 34 auf den Stirnflächen der Schenkel 71 und 72 des U-förmigen Trägerkörpers 7 befestigt wird, wobei die Länge der Nut 34 so bemessen ist, daß sie zusammen mit dem Plättchen 30 die beiden Schenkel 71 und 72 überbrückt. Durch Herausschneiden eines Mittelabschnitts des Plättchens 30 über dem Zwischenraum zwischen den beiden Schenkeln 71 und 72 entsteht dann der in Figur 3 dargestellte Trägerkörper 7 mit den darauf befestigten exakt fluchtenden Geradführungen 3 und 4 in Form V-förmiger Führungsnuten in den verbliebenen Plättchenabschnitten 31 und 41. Die V-förmigen Führungsnuten, die auch trapezförmig sein können, werden bei einem Siliziumplättchen durch Ätzen und bei einem Glasplättchen durch Schneiden hergestellt.

Das folgende bezieht sich wieder auf das in der Stammanmeldung beanspruchte. Für die Herstellung von Lasermodulen werden kunststoffummantelte Fasern verwendet. Bei diesen ist es notwendig, daß bis kurz, beispielsweise 10 mm und weniger hinter dem Taper der etwa 1 mm dicke Kunststoffmantel auf der Faser verbleibt. Dazu werden unterschiedlich tiefe Führungsnuten hergestellt, um den Dickenunterschied zwischen der nackten Faser mit einem Durchmesser von 130 µm in der unteren Führungsnut 3 und dem Kunststoffmantel in den beiden anderen Führungsnuten 4 und 51 auszugleichen.

Zur Herstellung eines Tapers muß eine Einschnürung 10 an einer Stelle mit bestimmtem Durchmesser quer zu ihrer Längsachse durchtrennt werden. Diese Stelle ist wegen des flachen Winkels der Einschnürung und des allmählichen Übergangs zwischen der Faser und der Einschnürung schwer zu finden. Unter der Voraussetzung, daß das Ende einer einzuschnürenden Faser an einer definierten Stelle der oder in einer definierten Entfernung von den beiden Geradführungen 3 und 4 liegt, und die Einschnürungen reproduzierbar gezogen werden, kann die Stelle für den Schnitt durch Messen von diesem Faserende aus leicht gefunden werden. Dies kann beispielsweise durch eine im konstanten Abstand von den Elektroden 91 und 92 der Heizeinrichtung 9 angeordnete feste Markierung erreicht werden, auf die das Faserende vor dem Einschnürungsvorgang eingestellt wird.

Bei der in den Figuren dargestellten Vorrichtung bildet die obere Klemmvorrichtung 5 das Grenzkraft-Reibgesperre. Anstelle dessen kann die Vorrichtung aber auch so ausgebildet sein, daß die untere Klemmvorrichtung 6 als Grenzkraft-Reibgesperre ausgebildet ist, während die obere Klemmvorrichtung 5 die Faser 2 nach oben mitzieht, wenn diese relativ zum unteren Grenzkraft-Reibgesperre 6 durchrutscht. Mit einer solchen Vorrichtung können relativ schlanke Einschnürungen 10 hergestellt werden, weil die Faser 2 relativ zu den Elektroden 91 und 92 während des Erweichungsvorganges noch verschoben wird.

**Patentansprüche**

Verfahren zur Herstellung zweier mit Abstand voneinander angeordneter, relativ zueinander fixierter und exakt fluchtender Geradführungen, insbesondere für optische Fasern, dadurch gekennzeichnet, daß ein plattenförmiges Substrat (30) mit zumindest einer durchgehenden geradlinigen Führungsnut (34) auf einem Trägerkörper (7) befestigt wird, und daß dann ein Mittelabschnitt des Substrats (30) entfernt wird, während die übrigen Abschnitte des Substrats (30) auf dem Trägerkörper (7) verbleiben.

**Claims**

Method of making two straight guides, arranged at a distance from, and fixed relative to, each other and exactly in line, particularly for optical fibres, characterized in that a laminar substrate (30) having at least one continous straight guiding groove (34) is fastened on a support element (7), and in that a central section of the substrate (30) is then removed, whilst the remaining sections of the substrate (30) remain on the support element (7).

**Revendications**

Procédé pour réaliser deux guides droits exactement alignés, fixes l'un par rapport à l'autre et placés à distance l'un de l'autre, en particulier pour fibres optiques, caractérisé en ce que l'on fixe un substrat (30) en forme de plaque, présentant au moins une rainure de guidage (34) droite et continue, sur une pièce de support (7) et que l'on enlève ensuite une partie centrale du substrat (30), pendant que les autres parties du substrat (30) restent sur le support (7).

FIG 1

FIG 2

FIG 3